# EUROPEAN PATENT APPLICATION

(11) **EP 3 153 343 A1**
(43) Date of publication of application: **12.04.2017**
(21) Application number: 15425081.5
(22) Date of filing: 06.10.2015
(51) Int. Cl.: B60L 11/18

(54) **ELECTRIC MOTOR VEHICLE AND ASSOCIATED RECHARGING SYSTEM FOR SAID ELECTRIC MOTOR VEHICLE**

(71) Applicant: S & H S.r.l., 20068 Peschiera Borromeo (MI) (IT)
(72) Inventor: Crivellaro, Guglielmo, 20068 Peschiera Borromeo MI (IT)
(74) Representative: Ciceri, Fabio

(57) **Abstract**

The present disclosure relates to an electric motor vehicle (1) and an associated recharging system. The electric vehicle (1) comprises a chassis (2), a body (3) that defines an interior compartment (4), a plurality of wheels (6) adapted to ensure stable support of the vehicle on the ground (7), at least one electric motor (9), at least one battery pack (8) for powering said at least one electric motor (9), a front seat (5) adapted to accommodate a driver, a magnetic induction plate (12) configured to receive electromagnetic waves to thereby generate at least one power signal for recharging said battery pack. The vehicle (1) is characterized in that it comprises an articulated structure (13) connected to a lower portion (2A) of said chassis (2), said articulated structure (13) being configured to reversibly move said magnetic induction plate (12) between a rest operating configuration and an extended operating configuration in which said magnetic induction plate (12) moves away from said lower portion (2A) of said chassis (2).

## Description

### FIELD OF THE INVENTION

The present invention relates to an electric motor vehicle and a system for recharging said electric motor vehicle as defined in the preambles of claims 1 and 13 respectively.

Particularly, the present invention concerns an electric motor vehicle and a recharging system for such vehicle that is configured to be recharged by inductive or wireless charging.

As used herein, the term electric motor vehicle (briefly referred to hereinafter as electric vehicle) is intended to designate a light-weight vehicle, generally not exceeding a weight of 550 kg, excluding the battery mass. Particularly, as used herein the term electric vehicle is intended to designate a vehicle that is stable relative to the ground, under both stationary and running conditions, without requiring external support means, such as kickstands and the like, and can accommodate at least one person n a protected position in an interior compartment.

Examples of such vehicles are the so-called four-wheeled quads or three-wheeled vehicles, with wheels arranged along two different staggered axes, for transportation of people and/or goods.

### Discussion of the related art

In cities, the need of using electric cars is increasingly felt, due to their known characteristics of being noiseless, pollution-free and cost-effective and of affording CO2 savings.

Car sharing schemes are becoming increasingly popular and widespread, their success being strongly related to the technical characteristics of the vehicles in use and the functions of such systems. Particularly, these electric car sharing systems allow a user registered with the car sharing service to use the car for a given period of time according to the run time of vehicle batteries.

On the other hand, in industry fleets of electric vehicles are frequently used for displacing goods and/or people from and to a base of operation in which they may remain for battery charging.

Generally, the range of prior art electric vehicles is a function of the charge level of their battery pack. Therefore, particularly referring to the car sharing example, at the end of the period of use, users shall connect the battery pack to the mains by means of a cable, for the battery to be charged when the vehicle is parked. Likewise, once recharging is complete, a user that is going to make use of the car sharing service shall disconnect the cable from the charging station and place it in the trunk of the vehicle.

Wireless inductive battery charging systems are also known. More in detail, with inductive charging systems the battery may be recharged by electromagnetic induction. In other words, current flows as a result of electromagnetic induction between two closely spaced plates.

As mentioned above, inductive charging systems comprise an emitter plate and a receiver plate.

The inductive emitter plate is located in the charging station and is configured to generate an electromagnetic field. On the other hand, the receiver plate is housed in the chassis of the vehicle and is equipped with an inductive coil configured to receive the electromagnetic waves generated by the inductive emitter plate, and generate an electric signal, to be used for recharging the battery pack.

### Prior art problem

Still referring to the car sharing example, a frequent problem in prior art electric vehicles is related to battery recharging.

When the vehicle is parked at the base of operations, it must be connected to a charging station to ensure that the batteries will be permanently charged and ready for next use.

The operation of currently available electric vehicles, including quads, cars or scooters, requires the use of an electric cable for connecting the vehicle and the recharging device.

For instance, in a car sharing context, as a user picks up the car, he/she is required to disconnect the cable from the charging station and from the car and place it in its case for storage in the trunk, and as he/she returns the car he/she has to carry out the same procedure in reverse order.

Similar circumstances are found in other contexts of use, such as taxis and industrial fleets.

This practice implies operational complexity and difficult use of electric vehicles and is an obstacle to widespread use of electric vehicles in the above mentioned fields.

In an attempt to overcome these problems, electric vehicles with wireless inductive charging systems as described above have been disclosed. Nevertheless, a problematic aspect of wireless charging systems when used in cars is associated with the geometry of relative positioning of the emitter and the receiver, when the vehicle is parked in the charging station.

Also, the efficiency of the energy transfer system for battery recharging is not only affected by the axial arrangement of the emitter and receiver devices, but also by the distance that separates them. The gap between the devices must be very narrow, such that the two emitter/receiver plates will almost contact each other.

In the configuration with a transmitter embedded in the road surface and a receiver mounted under the chassis of the vehicle, the minimum gap value exceeds 15 cm. This distance corresponds to the minimum height from the ground of the bottom of a running vehicle, as prescribed by currently applicable standards. Such distance between the transmitter and receiver devices leads to a considerably reduced efficiency of the inductive charging system. This is because the electromagnetic field generated by the inductive plate exponentially decreases as the distance therefrom increases.

In order to obviate this drawback, prior art electric cars have been modified by the addition of a greater number of inductive coils, to increase the efficiency of the inductive charge.

Nevertheless, an increased number of coils results in a considerably increased cost of the car, as well as in larger dimensions of the receiver plate, which is required to contain a greater number of coils.

Also, in all the above mentioned applications, the additional need is felt of identifying the vehicle that leaves or returns to the base station.

In the exemplary case of car sharing, as the vehicle is returned after use, it must be identified for billing, calculation of charges, acquisition of information data such as mileage, battery charge state, etc.

The problem of the prior art consists in that it requires specially designed devices and relevant applications, involving the use of a wireless Internet connection or GPS signals.

### SUMMARY OF THE INVENTION

The object of the present invention is to provide an electric vehicle and a recharging system that can obviate the above listed drawbacks of the prior art.

These objects are fulfilled by an electric motor vehicle as defined in claim 1 and a recharging system for such electric motor vehicle as defined in claim 13.

### Advantages of the invention

In one embodiment, an electric vehicle can be provided, which has an electric motor, and electronics for controlling and recharging batteries, such as to configure a vehicle that is optimally suitable for use in car sharing fleets or industrial applications having a similar operation, such as dispatch services, delivery services, pizza delivery, parcel delivery, etc.

According to the present invention, the electric vehicle comprises a wireless battery charging device integrated in the car, that can recharge the batteries when the vehicle is simply parked in the spaces designed therefor, by allowing energy transfer through a receiver plate placed in the vehicle and an emitter plate.

The inductive plate in the vehicle is integrated therein by an arrangement that can meet the restrictions imposed by the mechanical and physical properties of the vehicle, and has a drive mechanism that can lower it, at the charging station, to move it closer to the emitter plate.

According to the present invention, the inductive plate comprises a wireless charging device that allows vehicle identification data transmission and bidirectional information exchange between the vehicle and the charging station (i.e. the central control and management unit), such as pick-up time, drop-off time, mileage, vehicle identification number, battery charge state, billing data, and the like.

### BRIEF DESCRIPTION OF THE DRAWINGS

Further features and advantages of the quad f the present invention will result from the following description of one preferred embodiment thereof, which is given by way of illustration and without limitation with reference to the accompanying figures, in which:
- Figure 1 shows a simplified lateral view, with some missing parts, of an electric motor vehicle of the present invention,
- Figure 2 shows a simplified lateral view of a recharging system for the electric vehicle of Figure 1 according to the present invention;
- Figure 3 shows a front view of the electric vehicle of Figure 1 when it is proximate to an inductive charging plate;
- Figure 4 is a principle block diagram of the operation of the vehicle of Figure 1 and the recharging system of Figure 2.

### DETAILED DESCRIPTION

Referring to the accompanying figures, numeral 1 generally designates an electric motor vehicle of the invention.

As used hereinafter, the terms upper and lower will be related to a lying plane, i.e. the plane on which the electric vehicle 1 is designed to be driven and the terms front and rear will be related to the straight forward direction of the vehicle.

The electric motor vehicle 1 comprises a chassis 1 with a body 3 defining an interior comportment 4 in which a front seat 5 is adapted to accommodate a driver (not shown).

The electric motor vehicle 1 comprises a plurality of wheels 6 that can ensure stable support of the vehicle 1 on the ground 7.

In the example of the figures, the vehicle 1 has two steerable front wheels and two rear wheels, with the rear wheels possibly also being of steerable type.

Furthermore, as shown in the accompanying figures, and according to an aspect of the present disclosure, the chassis 2 and the body 3 of the vehicle 1 are designed to meet multiple needs, such as transportation of goods or people. For this purpose, the vehicle 1 as shown in the figures comprises a tarp trailer 3A, acting as a protected cargo compartment for transportation of goods.

The electric motor vehicle 1 comprises at least one battery pack 8 for powering at least one electric motor 9.

In one aspect, the battery pack 8 consists of one or more battery packs electrically connected together according to wiring diagrams that are known per se and will not be further described herein.

The battery pack 8 may be implemented using one of the automotive battery manufacturing technologies, such as those for producing zinc-air fuel cells, lead-acid batteries, nickel-cadmium batteries, nickel-metal hydride (NiMH) batteries, lithium-ion batteries, lithium-ion polymer batteries, etc.

This battery pack 8 is in turn electrically connected with the electric motor/s 9 to deliver the electric power required for moving the vehicle.

In one aspect, the electric motor 9 comprises one or more electric motors, which are configured to rotatably drive one or more wheels of the plurality of wheels 6 of the electric vehicle 1.

The electric vehicle 1 comprises, for example, an electric motor between the rear wheels and possibly an additional motor between the front driving wheels, each motor being kinematically connected to its respective wheels for driving them into rotation and acting as an electrodynamic brake upon them, to allow recovery of kinematic energy during the braking steps.

Furthermore, the electric vehicle 1 has front shock absorbers 1A and rear shock absorbers 1B associated with the respective wheels 6, suspensions 1C associated with the wheels 6, a steering system 10 comprising a steering wheel 11 for driving the steerable front wheels.

The electric vehicle 1 further comprises additional parts that typically form the equipment of such vehicles. These additional parts, which may be of mechanical, hydraulic, electric and/or electronic type, are known per se and will not be listed or described herein for simplicity.

According to a preferred embodiment of the electric vehicle 1, the latter consists of an electric vehicle having a mass of less than 550 kg, excluding the mass of the battery pack 8.

Particularly, the electric vehicle 1 is of small size, i.e. has a longitudinal dimension A of the order of 200÷350 cm, preferably about 300 cm or little more, a transverse dimension B of the order of 100÷160 cm, preferably about 100 cm and a height C of the order of 140÷160 cm, preferably about 150cm.

In other words, the electric vehicle 1 is of a type that can be technically configured as an electrically-powered quad, adapted to accommodate one or more persons and/or to carry goods.

In one aspect, the electric vehicle 1 comprises a magnetic induction plate 12 of a type configured to receive electromagnetic waves, i.e. an inductive receiver plate comprising at least one coil.

Such at least one coil is operably arranged in signal communication with the battery pack 8 to recharge it.

The electric vehicle 1 is characterized in that it comprises an articulated structure 13 which is connected to a lower portion 2A of the chassis 2.

Such articulated structure 13 is configured to reversibly move the magnetic induction plate 12 between a rest operating configuration and an extended operating configuration in which said magnetic induction plate 12 moves away from the lower portion 2A of the chassis 2.

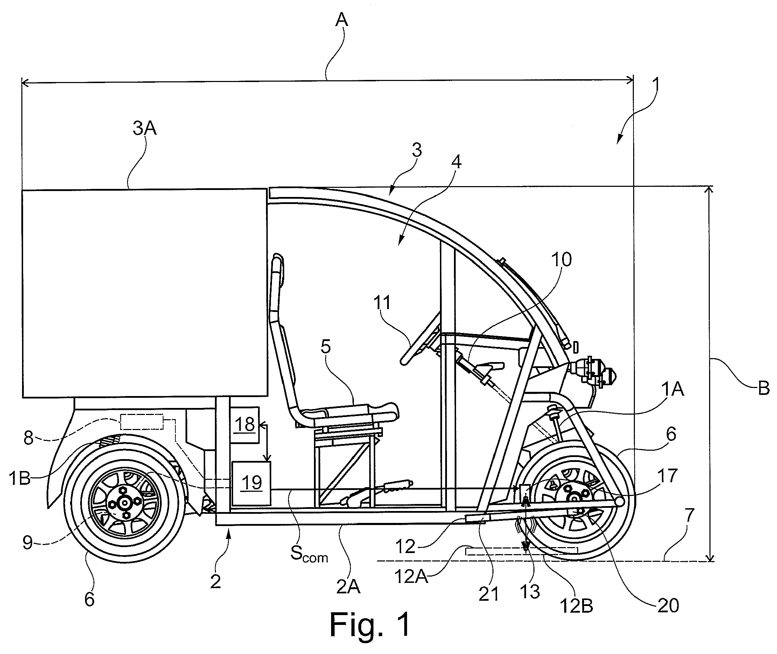

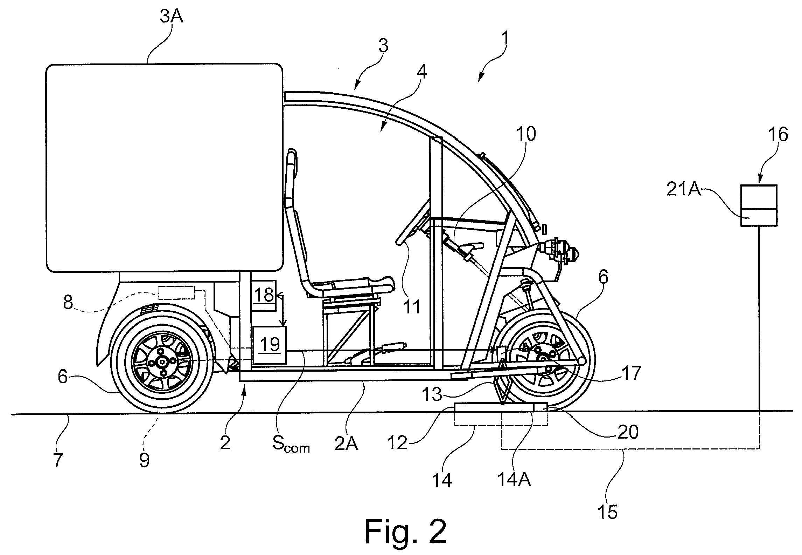

Particularly, also referring to Figures 1 and 2, it shall be noted that the articulated structure 13 can move the inductive plate 12 from a retracted position in which the upper surface 12A of the plate 10 is proximate to the lower portion 2A of the chassis 2 to a position in which it is has been moved away from said lower portion 2A of the chassis 2, such that its lower portion 23B is proximate to a magnetic induction emitter plate 14.

It shall be noted that the articulated structure 13 moves the receiver plate 12 from top (i.e. from the lower portion 2A of the chassis 2) to bottom, i.e. toward the ground 7.

This movement is preferably performed along a straight path, or alternatively along paths that also comprise lateral translational movements and/or rotational and translational movements with respect to an axis perpendicular to the ground 7.

According to a preferred embodiment, the articulated structure 13 consists of a parallel or four-bar linkage.

As shown in Figure 2, the magnetic induction emitter plate 14 is electrically connected, by means of electric cables 15 having appropriate sections, with an electric charging station 16.

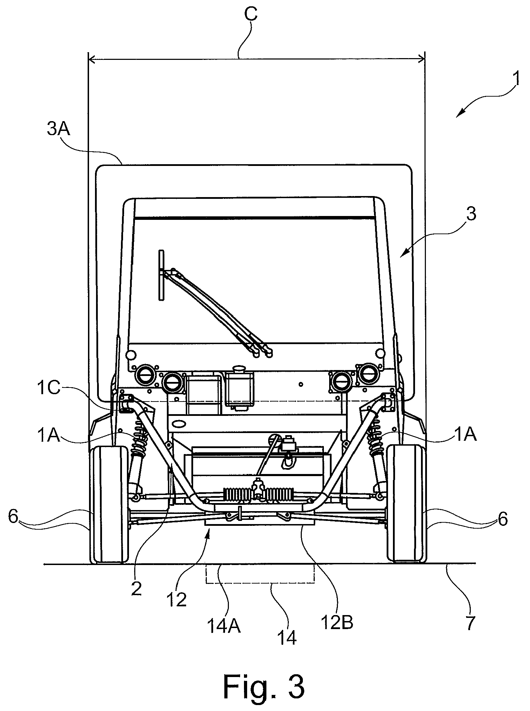

It shall be noted that the magnetic induction emitter plate 14 may be arranged in such position that its upper surface 14A projects out of the free ground surface 7 or, as shown in Figures 2 and 3, such that the upper surface 14A is substantially flush with the free ground surface 7, whereas the rest of the body of the plate 14 is embedded below the free ground surface 7.

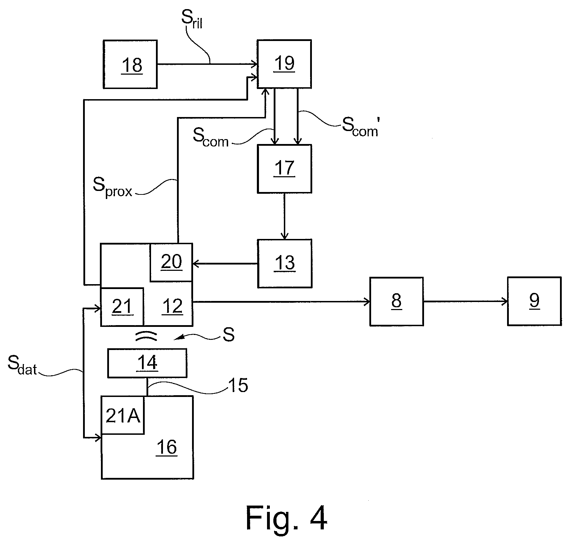

It shall be noted that the magnetic induction emitter plate 14 is configured to generate electromagnetic waves S (see Figure 4) when the magnetic induction plate 12 of the vehicle 1 is in its extended configuration.

In one aspect, the electric vehicle 1 comprises actuator means 17, operable on the articulated structure 13 to reversibly move the magnetic induction emitter plate 12 between the rest operating configuration and the extended operating configuration.

In other words, the actuator means 17 are operably connected with the articulated structure 14.

In one aspect, the actuator means 17 consist of manually, electrically and/or pneumatically operated actuator means.

For example, in one embodiment, the actuator means 17 comprise a worm that can be driven manually or by an electric motor, or comprise a hydraulic jack.

In order to control the actuation of the actuator means 17, the electric vehicle 1 comprises at least one sensor 18, which is configured to detect an operating physical quantity of the vehicle.

Thus, the at least one sensor 18 can generate at least one electric signal Sril as a function of the detected physical quantity, which is representative of the state of the vehicle 1.

For example, the at least one sensor 18 comprises one or more of the following sensors, each capable of generating its own detected signal Sril:
- an accelerometer to identify whether the vehicle is running or stationary,
- a volumetric sensor to identify whether the driver or other persons are in the vehicle,
- a handbrake sensor,
- a central locking sensor for each door of the vehicle;
- a gps for tracking the distance that the vehicle has covered.

The vehicle comprises an electronic apparatus 19 that has the purpose of managing the various functions of the vehicle, e.g. managing the charge of the battery pack 8, delivering power to the electric motors 9, managing the recharging step and other functions.

Particularly, in one aspect of the present disclosure, the electronic apparatus 19 is in signal communication with the at least one sensor 18 and is configured to receive the operating electric signal Sril generated by the sensor 18 for processing.

Once the electronic apparatus 19 has received and processed the operating electric signal Sril from the sensor/s 18, it can generate a control signal Scom to control the actuation of the actuator means 17 such that they may be actuated and move the inductive plate 12 of the vehicle 1 from the rest operating configuration to the extended operating configuration.

In one aspect, the articulated structure 13 is configured to place the inductive plate 12 of the electric vehicle 1 at a distance of less than 5 cm from, but not in direct contact with, preferably at a distance of 2 to 3 cm from the free surface 14A of the magnetic induction emitter plate 14.

This will provide a small gap, resulting in improved energy transfer from the charging station 16 to the battery pack 8.

According to one embodiment, in order to achieve an optimal distance between the inductive plate 12 of the electric vehicle 1 and the free surface 14A of the magnetic induction emitter plate 14, the inductive plate 12 comprises at least one proximity sensor 20 in signal communication with the electronic apparatus 19.

Such proximity sensor 20 is configured to generate at least one proximity signal (Sprox) which is received and processed by the electronic apparatus 19 such that the latter may generate a control signal Scom' to stop the actuator means 17 when the inductive plate 12 is proximate to the emitter plate 14 (i.e. at a distance of less than 5 cm) or if obstacles interpose between the inductive emitter plate 14 and the inductive receiver plate 12.

In other words, in response to the signals Sril of the sensors 18, the electronic apparatus 18 instructs the actuator means 17, through the signal Scom, to move the receiver plate 12 toward the emitter plate 14 and, in response to the signal Sprox detected by the proximity sensor 20, it stops the actuator means 17 through the signal Scom'.

In a preferred aspect, the control apparatus 19 emits a single control signal which, according to the data contained therein represents from time to time either the control signal Scom or the control signal Scom'.

The proximity sensor 20 includes a sensor selected from an optical sensor, an infrared sensor and/or a prod.

In one aspect, the vehicle 1 comprises a memory unit (not shown) in signal communication with the electronic apparatus 19. The latter is designed to send the results to such memory unit, i.e. to send the data resulting from the processing of the signals detected by the at least one sensor 18 as well as the proximity sensor 20.

In one embodiment of the present invention, the magnetic induction plate 12 of the vehicle 1 comprises transmitting/receiving means 21 for sending a data signal Sdat representative of the plurality of data units stored in the memory unit.

In one aspect, the transmitting/receiving means 21 are instructed to transmit the data signal Sdat by the electronic apparatus 19.

Particularly, the electronic apparatus 19 supervises data transmission/reception through the transmitting/receiving means when the magnetic induction plate 12 is in the extended operating configuration position.

The transmitting means 21 are also configured to receive data from the charging station 16.

In one aspect, the receiving/transmitting means 21 comprise a transmitter configured to transmit by modulation of a carrier frequency.

Particularly, the transmitter of the plate 12 transmits by modulation of a carrier frequency with a half duplex protocol based on the exchange of encrypted query codes, whose integrity is guaranteed by check codes.

In order to exchange data concerning the operation of the vehicle 1, the electric charging station 16 comprises transmitting/receiving means 21A configured to be tuned to the same frequency as the transmitter of the electric vehicle 1, and the same frequency is preferably a fixed frequency selected beforehand.

For example once the electronic apparatus 19 has checked the signals detected by the at least one sensor 18 (such as stationary vehicle, no passenger on board, handbrake sensor on) and has thus instructed (signal Scom) the actuator means (17) to move the receiver plate 12 and place it near the emitter plate 14 in response to the value representative of the proximity signal 20 (signal Scom), such electronic apparatus 19 instructs the transmitting means 21 to send a request on a service channel to ask for a channel to be used for data exchange.

It shall be noted that this transmission takes place at the same time as the battery pack 8 is being charged or at a time separate and distinct from the recharging time.

It shall be also noted that data transmission between transmitting/receiving means 21 and 21A preferably takes place along the path formed by the receiver plate 12, the emitter plate 14 and the cable 15.

As the answer from the receiver of the charging station 16 has been received and an ACK (acknowledge) has been sent, both transmitting/receiving means 21 and 21A move to the indicated frequency channel and start the data exchange process proper.

Such data exchange follows a half duplex protocol based on the exchange of encrypted query codes, whose integrity is guaranteed by special check codes of the CRC (Cycle Redundancy Check) type.

Particularly, in the encryption method used for data protection:
- as soon as data exchange is initiated, the inductive emitter plate 14 (i.e. the plate embedded in the ground 7) sends an alphanumeric code, typically a 64-digit code, toward the inductive receiver plate 12 to be connected;
- this code is used by the processing unit 19 to find the key that shall be used for encrypting the data to be exchanged, with an encryption algorithm of the "exchange" type (e.g. implemented with XOR operators) for hardware cost minimization.

In one aspect of the present disclosure, the data packet format is designed to be scalable for further extension, according to the following Tables 1 and 2, in which:
- Table 1 exemplifies the meaning and size of the message
- Table 2 exemplifies the structure of the message.

**Table 1**

| Meaning | Size (Bytes) |
|---|---|
| Header | 2 |
| Number of bytes | 1 |
| Message | Max 254 |
| CRC code | 1 |

**Table 2**

| Code | Meaning | Following bytes |
|---|---|---|
| | | |
| 1 | ACK | 0 |
| 2 | NAK | 0 |
| 3 | Vehicle identification | 16 |
| 4 | Battery charge state | 8 |
| 5 | Battery parameters | 16 |
| 6 | Max charging power | 8 |
| 7 | Last connection data | 16 |
| 8 | FREE | ND |
| 9 | FREE | ND |
| 10 | FREE | ND |

Those skilled in the art will obviously appreciate that a number of changes and variants may be made to the above described quad, still within the scope of the invention, as defined in the following claims.

## Claims

1. An electric motor vehicle (1) comprising:
- a chassis (2);
- a body (3) that defines an interior compartment (4),
- a plurality of wheels (6) for ensuring stable support of the vehicle on the ground (7);
- at least one electric motor (9);
at least one battery pack (8) for powering said at least one electric motor (9);
- a front seat (5) for a driver,
- a magnetic induction plate (12) configured to receive electromagnetic waves to thereby generate at least one power signal for recharging said battery pack (8);
**characterized in that** it comprises an articulated structure (13) connected to a lower portion (2A) of said chassis (2), said articulated structure (13) being configured to reversibly move said magnetic induction plate (12) between a rest operating configuration and an extended operating configuration in which said magnetic induction plate (12) moves away from said lower portion (2A) of said chassis (2).

2. An electric motor vehicle as claimed in claim 1, comprising actuator means (17) operable on said articulated structure (13) to reversibly move said inductive plate (12) between said rest operating configuration and said extended operating configuration.

3. An electric motor vehicle as claimed in claim 2, comprising:
- at least one sensor (18) configured to detect an operating physical quantity of said electric motor vehicle to thereby generate at least one operating electric signal (Sril) in response to said detected physical quantity,
- an electronic apparatus (19) in signal communication with said at least one sensor (18), configured to receive said operating electric signal (Sril) and to process it to thereby generate a control signal (Scom) to control the actuation of said actuator means (17).

4. An electric motor vehicle as claimed in claim 3, comprising at least one proximity sensor (20) in signal communication with said electronic apparatus, said at least one proximity sensor (20) is associated with said magnetic induction plate (12) and is configured to generate at least one proximity signal (Sprox), said electronic apparatus (19) is configured to receive and process said proximity signal (Sprox) to generate a second control signal (Scom') to stop the movement of said actuator means (17).

5. An electric motor vehicle as claimed in claim 4, wherein:
- said proximity sensor (20) includes a sensor selected from an optical sensor, an infrared sensor and/or a prod;
- said at least one sensor (18) includes:
- an accelerometer to identify whether the vehicle is running or stationary,
- a volumetric sensor to identify whether the driver or other persons are in the vehicle,
- a handbrake sensor,
- a central locking sensor for each door of the vehicle;
- a gps for tracking the distance that the vehicle has covered.

6. An electric motor vehicle as claimed in claim 1, wherein said magnetic induction plate (12) comprises at least one inductive coil arranged in signal communication with said battery pack (8) to recharge said battery pack.

7. An electric motor vehicle as claimed in claim 3, comprising:
- a memory unit in signal communication with said electronic apparatus (19);
- said electronic apparatus (19) being configured to send data concerning the operation of said vehicle, as detected by said at least one sensor (18), to said memory unit.

8. An electric motor vehicle as claimed in claim 7, wherein said magnetic induction plate (12) comprises receiving/transmitting means (21) for receiving/transmitting a data signal (Sdat), to send/receive said plurality of data units concerning the operation of said vehicle when said magnetic induction plate (12) is in said operating extended configuration position said receiving/transmission means (21) being instructed to emit said data signal (Sdat) from said electronic apparatus (19).

9. An electric motor vehicle as claimed in claim 8, wherein the transmitting/receiving means (21) comprise a transmitter configured to transmit by modulation of a carrier frequency.

10. An electric motor vehicle as claimed in claim 9, wherein said transmitter of the plate 12 transmits by modulation of a carrier frequency with a half duplex protocol based on the exchange of encrypted query codes, whose integrity is guaranteed by check codes.

11. An electric motor vehicle as claimed in claim 1, wherein said articulated structure (13) is configured as a parallel or four-bar linkage.

12. An electric motor vehicle as claimed in claim 1, wherein said electric motor vehicle (1) has an unladen mass not exceeding 0.55 t, excluding the battery mass.

13. A system for inductively recharging an electric motor vehicle, comprising:
- an electric motor vehicle (1) as claimed in any of the preceding claims 1 to 12,
- an electric charging station (16) configured to receive said electric vehicle (1) and equipped with at least one magnetic induction emitter plate (14) which is configured to generate electromagnetic waves when said magnetic induction plate (12) of said vehicle is in said extended configuration.

14. A system for inductively recharging an electric motor vehicle as claimed in claim 13, wherein said electric charging station (16) comprises a receiver (21A) which is configured to be tuned to the same frequency as said transmitter of said receiving/transmitting means (21) of said electric vehicle, said same frequency being a fixed frequency, to receive said data signal (Sdat).
